# EUROPEAN PATENT APPLICATION

(11) **EP 4 383 074 A1**
(43) Date of publication of application: **12.06.2024**
(21) Application number: 22851871.8
(22) Date of filing: 19.07.2022
(51) Int. Cl.: G06F 9/50

(54) **SERVICE PROCESSING METHOD AND APPARATUS, SERVER, STORAGE MEDIUM, AND COMPUTER PROGRAM PRODUCT**

(30) Priority: 02.08.2021 CN 202110884435
(71) Applicant: Tencent Technology (Shenzhen) Company Limited, Shenzhen, Guangdong, 518057 (CN)
(72) Inventor: XU, Shili, Shenzhen, Guangdong 518057 (CN); FU, Yabin, Shenzhen, Guangdong 518057 (CN); ZHONG, Bingwu, Shenzhen, Guangdong 518057 (CN); HU, Yulin, Shenzhen, Guangdong 518057 (CN); LU, Yanhui, Shenzhen, Guangdong 518057 (CN); MA, Xiaohu, Shenzhen, Guangdong 518057 (CN)
(74) Representative: Eisenführ Speiser
(86) International application number: PCT/CN2022/106367
(87) International publication number: WO 2023/011157

(57) **Abstract**

Disclosed in embodiments of the present invention are a service processing method and apparatus, a server, a storage medium, and a computer program product, relating to resource scheduling in cloud technology. The method comprises: determining a first computing power resource required to execute an offline task; determining a number N of edge servers used to execute the offline task, a cloud application running on the N edge servers; idle computing power resources of the N edge servers being greater than the first computing power resource, and the idle computing power resources of the N edge servers being the sum of the idle computing power resources of each edge server of the N edge servers; and scheduling the offline task to the N edge servers in a distributed manner, so that each edge server of the N edge servers performs the offline task using the idle computing power resources of each edge server, while ensuring the cloud application runs normally. Using the embodiments of the present invention, a resource utilization rate of an edge server is increased.

## Description

### RELATED APPLICATION

This application claims priority to Chinese Patent Application No. 202110884435.7, entitled "METHOD AND APPARATUS FOR PROCESSING SERVICE" filed with the China National Intellectual Property Administration on August 02, 2021, which is incorporated herein by reference in its entirety.

### FIELD OF THE TECHNOLOGY

The present disclosure relates to the field of computer technology, and in particular, to a method and an apparatus for processing a service, a server, a storage medium, and a computer program product.

### BACKGROUND OF THE DISCLOSURE

A cloud application refers to a novel application which transforms local installation and location computation in usage of conventional software into a service having instant applicability, and connects and controls a remote server cluster through the Internet or a local area network to execute logic or computing tasks. In simple terms, the cloud application means that a cloud server is responsible for operation and computation of a certain application while a terminal is only responsible for display. For example, as a typical cloud application, cloud gaming means that a game runs on a remote server based on cloud computing technology, need not be downloaded or installed on a terminal, and does not depend on a performance of the terminal. A problem that the performance of the terminal is too low to execute demanding games is thus well addressed.

In view of the above, operation of cloud applications has a strict requirement on low latency and high stability of a network, and a conventional network environment cannot meet such requirement of the cloud applications. Therefore, a large number of edge servers are usually deployed to reduce a distance between an application server and a user and thereby provide a more stable network environment to the user. Generally, activation of users of a cloud application has an obvious tidal pattern. Taking the cloud gaming as an example, there are a lot of online gamers in peak hours, such as evening, and there are few online gamers during off-peak hours, such as morning and noon. In order to improve user's experience on the cloud application, resources are always prepared according to the maximum number of online users. Thus, a part of the resources are idle in the off-peak hours and thereby results in a waste. At present, how to reduce the waste and improve a utilization rate of the resources has become a hot research issue in the field of cloud applications.

### SUMMARY

A method and an apparatus for processing a service, a server, a storage medium, and a computer program product are provided according to various embodiments of the present disclosure.

A method for processing a service is provided, comprising: determining first computation resources for executing an offline task; determining one or more edge servers, of which a quantity is N, for executing the offline task, where a cloud application runs on the one or more edge servers, a quantity of idle computation resources of the one or more edge servers is greater than a quantity of the first computation resources, and the idle computation resources of the one or more edge servers is a sum of respective idle computation resources of all edge servers in the one or more edge servers; and distributing the offline task among the one or more edge servers through scheduling to enable all of the one or more edge servers to execute the offline task using the respective idle computation resources while ensuring normal operation of the cloud application.

Another method for processing a service is provided. The method is executable by an edge server among one or more edge servers, of which a quantity is N, for executing an offline task, and a cloud application runs on the one or more edge servers. The method comprises: receiving an allocated offline task, which is distributed by a management server through scheduling, where the allocated offline task comprises the offline task received by the management server, or the allocated offline task comprises a subtask which corresponds to the edge server among N subtasks, and the N subtasks are obtained by dividing the offline task based on idle computation resources of each edge server in the one or more edge servers; and executing the allocated offline task using the idle computation resources of the edge server while ensuring normal operation of the cloud application.

An apparatus for processing a service is provided, comprising: a determining unit, configured to determine first computation resources for executing an offline task, and further configured to determine one or more edge servers, of which a quantity is N, for executing the offline task, where a cloud application runs on the one or more edge servers, a quantity of idle computation resources of the one or more edge servers is greater than a quantity of the first computation resources, and the idle computation resources of the one or more edge servers is a sum of respective idle computation resources of all edge servers in the one or more edge servers; and a scheduling unit, configured to distribute the offline task among the one or more edge servers through scheduling to enable all of the one or more edge servers to execute the offline task using the respective idle computation resources while ensuring normal operation of the cloud application.

Another apparatus for processing a service is provided, comprising: a receiving unit, configured to receive an allocated offline task, which is distributed by a management server through scheduling, where the allocated offline task comprises an offline task received by the management server, or the allocated offline task comprises a subtask which corresponds to an edge server among N subtasks, the N subtasks are obtained by dividing the offline task based on idle computation resources of each edge server in one or more edge servers, of which a quantity is N, for executing the offline task, and a cloud application runs on the one or more edge servers; and an executing unit, configured to execute the allocated offline task using the idle computation resources of the edge server while ensuring normal operation of the cloud application.

A server is provided, comprising a processor configured to execute one or more computer-readable instructions, and a computer-readable storage medium storing the one or more computer-readable instructions, where the one or more computer-readable instructions when executed by the processor are configured to perform: determining first computation resources for executing an offline task; determining one or more edge servers, of which a quantity is N, for executing the offline task, where a cloud application runs on the one or more edge servers, a quantity of idle computation resources of the one or more edge servers is greater than a quantity of the first computation resources, and the idle computation resources of the one or more edge servers is a sum of respective idle computation resources of all edge servers in the one or more edge servers; and distributing the offline task among the one or more edge servers through scheduling to enable all of the one or more edge servers to execute the offline task using the respective idle computation resources while ensuring normal operation of the cloud application.

Another server is provided, comprising a processor configured to execute one or more computer-readable instructions, and a computer-readable storage medium storing the one or more computer-readable instructions, where the one or more computer-readable instructions when executed by the processor are configured to perform: receiving an allocated offline task, which is distributed by a management server through scheduling, where the allocated offline task comprises an offline task received by the management server, or the allocated offline task comprises a subtask which corresponds to an edge server among N subtasks, and the N subtasks are obtained by dividing the offline task based on idle computation resources of each edge server in one or more edge servers of which a quantity is N; and executing the allocated offline task using the idle computation resources of the edge server while ensuring normal operation of the cloud application.

A computer storage medium storing computer-readable instructions is provided. The computer-readable instructions when executed by a processor are configured to perform: determining first computation resources for executing an offline task; determining one or more edge servers, of which a quantity is N, for executing the offline task, where a cloud application runs on the one or more edge servers, a quantity of idle computation resources of the one or more edge servers is greater than a quantity of the first computation resources, and the idle computation resources of the one or more edge servers is a sum of respective idle computation resources of all edge servers in the one or more edge servers; and distributing the offline task among the one or more edge servers through scheduling to enable all of the one or more edge servers to execute the offline task using the respective idle computation resources while ensuring normal operation of the cloud application.

Alternatively, the computer-readable instructions when executed by the processor are configured to perform: receiving an allocated offline task, which is distributed by a management server through scheduling, where the allocated offline task comprises an offline task received by the management server, or the allocated offline task comprises a subtask which corresponds to an edge server among N subtasks, and the N subtasks are obtained by dividing the offline task based on idle computation resources of each edge server in one or more edge servers of which a quantity is N; and executing the allocated offline task using the idle computation resources of the edge server while ensuring normal operation of the cloud application.

A computer program product or computer-readable instructions is provided. The computer program product comprises the computer-readable instructions, and the computer-readable instructions are stored in a computer storage medium. A processor of a server reads the computer-readable instructions from the computer storage medium, and the processor executes the computer-readable instructions to enable the server to perform: determining first computation resources for executing an offline task; determining one or more edge servers, of which a quantity is N, for executing the offline task, where a cloud application runs on the one or more edge servers, a quantity of idle computation resources of the one or more edge servers is greater than a quantity of the first computation resources, and the idle computation resources of the one or more edge servers is a sum of respective idle computation resources of all edge servers in the one or more edge servers; and distributing the offline task among the one or more edge servers through scheduling to enable all of the one or more edge servers to execute the offline task using the respective idle computation resources while ensuring normal operation of the cloud application.

Alternatively, the processor of the server reads the computer-readable instructions from the computer storage medium, and the processor executes the computer-readable instructions to enable the server to perform: receiving an allocated offline task, which is distributed by a management server through scheduling, where the allocated offline task comprises an offline task received by the management server, or the allocated offline task comprises a subtask which corresponds to an edge server among N subtasks, and the N subtasks are obtained by dividing the offline task based on idle computation resources of each edge server in one or more edge servers of which a quantity is N; and executing the allocated offline task using the idle computation resources of the edge server while ensuring normal operation of the cloud application.

### BRIEF DESCRIPTION OF THE DRAWINGS

Hereinafter drawings required for describing embodiments of the present disclosure are briefly introduced, in order to clarify technical solutions in the embodiments. Apparently, the drawings in the following description show some embodiments of the present disclosure, and those skilled in the art may derive other drawings from these drawings without creative efforts.
Figure 1 is a schematic structural diagram of a system for managing a cloud application according to an embodiment of the present disclosure.
Figure 2 is a schematic flowchart of a method for processing a service according to an embodiment of the present disclosure.
Figure 3 is a schematic flowchart of another method for processing a service according to an embodiment of the present disclosure.
Figure 4 is a schematic structural diagram of a system for processing a service processing according to an embodiment of the present disclosure.
Figure 5 is a schematic structural diagram of an apparatus for processing a service according to an embodiment of the present disclosure.
Figure 6 is a schematic structural diagram of another apparatus for processing a service according to an embodiment of the present disclosure.
Figure 7 is a schematic structural diagram of a server according to an embodiment of the present disclosure.
Figure 8 is a schematic structural diagram of another server according to an embodiment of the present disclosure.

### DESCRIPTION OF EMBODIMENTS

Hereinafter details of the present disclosure are illustrated in conjunction with the drawings and embodiments to clarify objectives, technical solutions, and advantages of the present disclosure. Specific embodiments described herein are only intended for explaining the present disclosure, and not for limiting the present disclosure.

A solution for processing a service is provided according to embodiments of the present disclosure. The solution can exploit of resources of edge servers thoroughly, improve a utilization rate of the resources, and reduce a cost of operating the edge servers for cloud applications. In the solution, when receiving an offline task that is to be executed, a management server may first evaluate first computation resources for executing the offline task, and then determines N edge server(s) for executing the offline task. A quantity of idle computation resources of the N edge server(s) is greater than a quantity of the first computation resources. Afterwards, the management server distributes the offline task among the N edge server(s) through scheduling, so that the N edge server(s) use the respective idle computation resources to execute the offline task while ensuring normal operation of a cloud application (i.e., maintaining the cloud application having a higher priority than the offline task in consuming computation resources). N may be greater than or equal to 1. When N is equal to 1, distributing through the scheduling refers to allocating the offline task to an edge server for independent execution. When of N is greater than 1, distributing through the scheduling refers to allocating the offline task to multiple edge servers for collective execution. In such case, the offline task may be divided into multiple subtasks, and each edge server is responsible for executing one subtask. Hence, loads can be shared among the edge servers, and hence the cloud application is ensured to operate normally in each edge server. Alternatively, the offline task may be allocated to each edge server separately, and each of the multiple edge servers executes the same offline task, which can improve an execution speed of the offline task. According to such solution, the offline task can be executed using the idle computation resource in each edge server while ensuring normal operation of the cloud application, regardless of peak or off-peak hours. Hence, a waste of computation resources is prevented in each edge server, a utilization rate of computation resources is improved, and a cost of operating the edge servers is reduced.

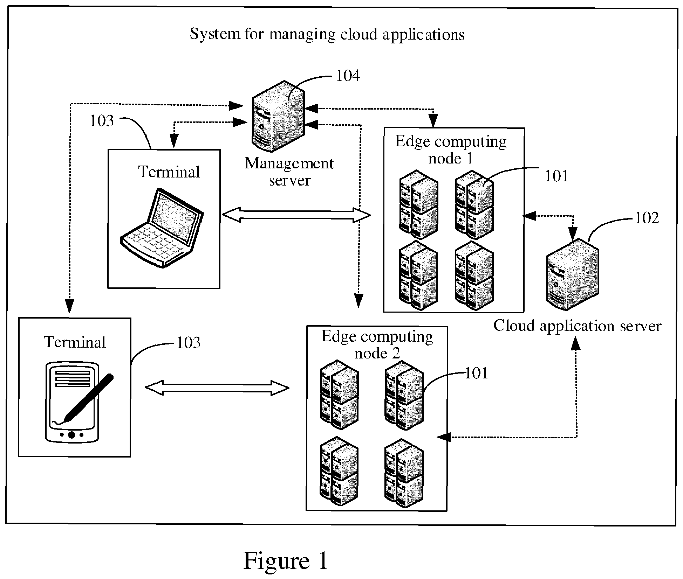

On a basis of the foregoing solution, a system for managing a cloud application is provided according to embodiments of the present disclosure. Reference is made to Figure 1, which is a schematic structural diagram of a system for managing a cloud application according to an embodiment of the present disclosure. The system as shown in Figure 1 comprises at least one edge server 101, which may be configured to run a cloud application. The at least one edge server 101 may run the same cloud application or run different cloud application. Common cloud applications include cloud gaming, cloud education, cloud conferencing, and cloud social networking, etc.

In an embodiment, the at least one edge server 101 may be deployed among multiple edge computing nodes. The edge computing node may be regarded as a node for edge computing. The edge computing may refer to using an open platform, in which core capabilities such as network, computing, storage, and application are integrated, to provide a service at a side close to an object or a data source according to a principle of proximity. An application program for the edge computing is initiated at an "edge" to render a response of a network service faster, and hence basic industrial requirements on real-time services, application intelligence, security and privacy protection, and the like are met. One or more edge servers having a capability of graphics processing run at each edge computing node, and each edge server may be called a computing node. Taking Figure 1 as an example, edge computing node 1 comprises four edge servers, and edge computing node 2 may also comprise four edge servers.

In an embodiment, the system as shown in Figure 1 may further comprise a cloud application server 102. The cloud application server 102 is connected to the at least one edge server 101. The cloud application server 102 may provide execution data for the cloud application(s) to each edge server 101, so that each edge server 101 is capable to run the cloud application(s) based on the execution data provided by the cloud application server.

In an embodiment, the system as shown in Figure 1 may further comprise a terminal 103. The terminal 103 may be connected to the at least one edge server 101. The terminal 103 is configured to receive and display an image, which is generated by the edge server 101 performing rendering on the cloud application. For example, the terminal 103 displays a game picture generated through rendering of the edge server 101. The terminal 103 may be a mobile intelligent terminal, which is a device having various manners of human-computer interaction, having an Internet accessing capability, usually equipped with various operating systems, and having a strong processing capability. The terminal 103 may include a smartphone, a tablet computer, a notebook computer, a desktop computer, a smart loudspeaker, a smartwatch, a vehicle-mounted terminal, and a smart TV, etc.

In an embodiment, the system as shown in Figure 1 may further comprise a management server 104. The management server 104 is connected to the terminal 103 and the at least one edge server 101. The management server 104 may be configured to manage and schedule the at least one edge server 101. For example, when monitoring that any cloud application is activated in any terminal, the management server 104 may select one or more suitable edge servers to execute the cloud application activated in the terminal according to a current load and a current status of an idle computation resource at each edge server 101. As another example, when a user submits an offline task to the management server 104, the management server 104 determines to schedule the offline task to one or more edge servers 101 according to a status of the idle computation resource at each edge server, and the one or more edge servers 101 to which the offline task is allocated use the respective idle computation resource(s) to execute the offline task while ensuring the normal operation of the cloud application(s). Thereby, the normal operation of the cloud application(s) is ensured, and the idle computation resources when running the cloud application(s) are prevented from being wasted. A utilization rate of resources at each edge server is improved, and hence a cost of operating the edge servers is reduced.

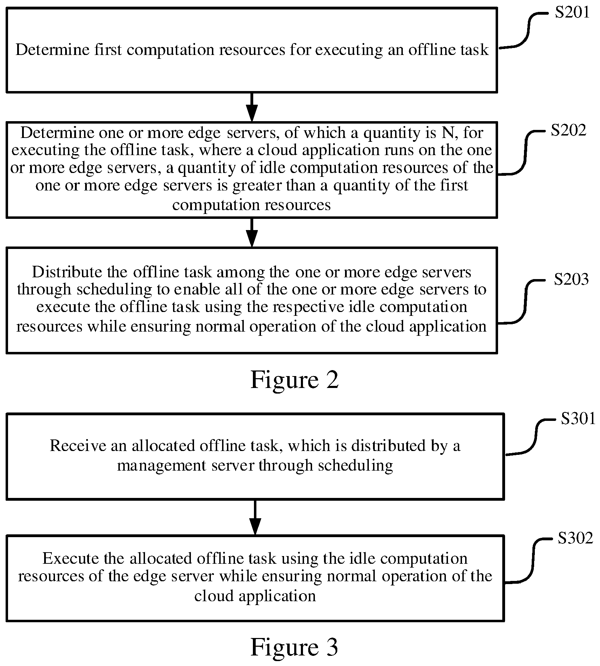

On a basis of the foregoing system, a method for processing a service is provided according to embodiments of the present disclosure. Reference is made to Figure 2, which is a schematic flowchart of a method for processing a service according to an embodiment of the present disclosure. The method as shown in Figure 2 is executable by a management server, especially, by a processor of the management server. The method as shown in Figure 2 may comprise following steps S201 to S203.

In step S201, first computation resources for executing an offline task are determined.

The offline task refers to a task that does not need to be executed online in real time. For example, it may be rendering a video with a special effect offline, or training an artificial intelligence model offline.

In an embodiment, the computation resources of a quantity of the first computation resources are different when a main load of executing the offline task has different types. Specifically, in a case that the main load of executing the offline task has a type of the graphics processing unit (GPU), that is, a main part of a load generated by executing the offline task is concentrated on the GPU, the first computation resources may include one or more of: a network bandwidth, an internal memory, floating-point operations per second (FLOPS) of the GPU, operations per second (OPS) of the GPU, and a throughput.

In a case that the main load of executing the offline task has a type of the central processing unit (CPU), that is, a main part of a load generated by executing the offline task is concentrated on the CPU, the first computation resources may include one or more of: an internal memory, a network bandwidth, FLOPS of the CPU, and OPS of the CPU. In a case that the main load of executing the offline task is of a mixed type, that is, the load generated by executing the offline task is on both the CPU and the GPU, the first computation resources is a combination of those of both foregoing types.

The FLOPS may be measured as half-precision FLOPS, single-precision FLOPS, and double-precision FLOPS. When calculating the FLOPS of the GPU, it is necessary to calculate the half-precision FLOPS of the GPU, the single-precision FLOPS of the GPU, and the double-precision FLOPS of the GPU, respectively. Similarly, when calculating the FLOPS of the CPU, it is also necessary to calculate the half-precision FLOPS of the CPU, the single-precision FLOPS of the CPU, and the double-precision FLOPS of the CPU, respectively. Currently, standard measurement on a computing capability under FLOPS generally includes tera FLOPS (TFLOPS), giga FLOPS (GFLOPS), mega FLOPS (MFLOPS), peta FLOPS (PFLOPS), and the like.

Currently, standard measurement on a computing capability under OPS generally includes million OPS (MOPS), giga OPS (GOPS), tera OPS (TOPS), and the like.

In an embodiment, the first computation resources for executing the offline task may be estimated based on computation resources consumed for executing a history offline task similar to the offline task. In specific implementation, determining the first computation resources for executing the offline task may comprises following steps. A degree of computation complexity corresponding to a type of the offline task is determined based on a correspondence between the types of the offline task and degrees of the computation complexity. History offline tasks are searched for at least one matching task according to the determined degree of computation complexity, where a degree of computation complexity of each matching task matches the determined degree of computation complexity. The first computation resources for executing the offline task are estimated based on computation resources consumed for executing each matching task.

A task may be categorized according to its content. For example, content of a task is rendering an offline video, and the type of the task may be "video rendering". As another example, content of a task is to training a model, and the type of the task may be "model training". Computation complexity may also be called algorithm complexity. The algorithm complexity represents resources for executing an algorithm which is compiled as an executable program, and the resources include time resources and internal-memory resources. The time resources may be measured through the FLOPS and the OPS. Herein executing the offline task is essentially executing an executable program complied for the offline task.

The correspondence between the types of the offline task and the degrees of computation complexity may be determined based on the degree of computation complexity for executing the history offline tasks, for example, the degree of computation complexity corresponding to executing a task of model training and the degree of computation complexity corresponding to executing a task of video rendering. The degree of computation complexity corresponding to a certain type of a task may represent an order of magnitude of computation complexity for executing the task type.

In an embodiment, searching the history offline tasks for the at least one matching task according to the determined degree of computation complexity may comprise following steps. All history offline tasks are searched for a history offline task of which the degree of computation complexity matches the determined degree of computation complexity, and the history offline task is determined to serve as the matching task. A degree of computation complexity matching another degree of computation complexity refers to that a difference between the two degrees of computation complexity is less than a designated value. Among the history offline tasks that have been executed, not only a history offline task of the same type as the offline task has the degree of computation complexity matching that of the offline task, but also a history offline task of a different type from the offline task may have a degree of computation complexity matching that of the offline task. Accordingly, when determining the matching task(s), the matching task is not selected according to the degree of computation complexity corresponding to the offline task, instead of the type of the offline task. In such manner, more matching tasks can be obtained from the history offline tasks. Since the computation resources required by the offline task are estimated based on the computation resources consumed by the matching tasks, the first computation resources can be estimated with more accuracy.

In practice, it is also applicable to determine history offline tasks having the same type as the offline task from all history offline tasks as the matching tasks, and estimate the first computation resources based on computation resources consumed by these matching tasks. The matching tasks may be flexibly selected according to an actual requirement, which is not specifically limited herein.

As described above, the first computation resources may include any one or more of a GPU computation resource, a CPU computation resource, an internal memory, a network bandwidth, and a network throughput. Estimating the first computation resources for executing the offline task based on the computation resources consumed for executing each matching task may comprise a following step. Each type of computation resources for executing the offline task is estimated based on such type of computation resources consumed for executing each matching task. For example, the GPU computation resource required for executing the offline task is estimated based on the GPU computation resource consumed for executing each matching historical task. As another example, the internal memory required for executing the offline task is estimated based on the internal memory consumed for executing each matching historical task.

In specific implementation, estimating the first computation resources for executing the offline task based on the computation resources consumed for executing each matching task may comprise a following step. Quantities of the computation resources consumed for executing all matching tasks, respectively, are averaged to obtain a quantity of the first computation resources for executing the offline task.

In another embodiment, estimating the first computation resources for executing the offline task based on the computation resources consumed for executing each matching task may comprise following steps. A weight is assigned to each matching task according to a relationship between the type of each matching task and the type of the offline task. A weighted average of quantities of all matching tasks are calculated based on the weight of each matching task to obtain a quantity of the first computation resources for executing the offline task. For example, a larger weight may be assigned to the matching task having the same type as the offline task, while a smaller weight may be assigned to the matching task having a different type from the offline task.

In an embodiment, the offline task may correspond to a threshold of execution duration, and the first computation resources for executing the offline task refers to the computation resources required for completing the offline task in such threshold. Different thresholds of execution duration may lead to different quantities of the first computation resources.

In step S202, one or more edge servers, of which a quantity is N, for executing the offline task are determined, where a cloud application runs on the one or more edge servers, and a quantity of idle computation resources of the one or more edge servers is greater than a quantity of the first computation resources.

The cloud application is deployed to run on M edge servers to run, that is, M edge servers participate in operation of the cloud application. In this step, the N edge server(s) are selected from the M edge servers. The N edge server(s) for executing the offline task may be selected from the M edge servers based on idle computation resources of each edge server among the M edge servers and the first computation resources. The idle computation resources of each edge server may be determined based on second computation resources required for operating the cloud application in such edge server and total computation resources of such edge server. The second computation resources required for operating the cloud application in each edge server may be estimated by the management server based on computation resources consumed for operating the cloud application in history. For example, the management server may obtain quantities of the computation resources consumed in multiple history operations, respectively, of the cloud application, and then average these quantities to estimate the second computation resources required by the edge server for operating the cloud application. As discussed above, the computation resources may have various types. Quantities of the computation resources of each type, which are required in all history operations of the cloud application, are averaged to obtain a quantity of computation resources of such type required by the edge server for a current operation of the cloud application.

In an embodiment, N is an integer greater than or equal to 1. In a case that N is equal to 1, any edge server, of which a quantity of the idle computation resources is greater than a quantity of the first computation resources, may be selected from the M edge servers as the edge server for executing the offline task.

In an embodiment, N is greater than 1, and determining the N servers configured to execute the offline task comprises following steps. The idle computation resources of each edge server among the M edge servers are compared with the first computation resources. The N edge servers, each of which a quantity of the idle computation resources is greater than the quantity of the first computation resources, are determined as the N edge servers for executing the offline task. The idle computation resources of each edge server may be determined based on total computation resources of such edge server and the second computation resources required for operating the cloud application. For example, the idle computation resources of each edge server is obtained by subtracting the second computation resources of such edge server from the total computation resources of such edge server. As another example, the idle computation resources of each edge server is obtained through: first adding reserved computing resources to the second computation resources required by such edge server for operating the cloud application, and then subtracting a sum of the two from the total computation resources of such edge server. A purpose of such solution is to reserve some computation resources for the operation of the cloud application. Hence, it is prevented that the edge server from fails to respond in time when the computation resources required for operating the cloud application increase suddenly, which may reduce an operating speed and responsiveness of the cloud application.

For the sake of brevity, a manner for determining the N edge servers for executing the offline task are determining each edge server, of which a quantity of idle computation resources is greater than a quantity of the first computation resources, among the M edge servers as the N edge servers. Although the idle computation resources of each of the N edge servers are sufficient for operating the offline task independently, herein the offline task may be distributed among the N edge servers through scheduling for collective execution. Thereby, a burden of the first computation resources for executing the offline task can be shared among different edge servers, and each edge server can reserve some computation resources. In a case that the computation resources required for operating the cloud application increases in a certain edge server, the edge server can allocate the reserved computation resources to the cloud application in time while ensuring that the execution of the offline task is not suspended.

In another embodiment, determining the N edge servers for executing the offline task comprises following steps. The idle computation resources of each edge server in M edge servers are compared with the first computation resources. In a case that there is no edge server of which a quantity of the idle computation resources is greater than a quantity of the first computation resources, multiple combinations are obtained among the M edge servers. Each combination comprises at least two edge servers. A quantity of total idle computation resources of each combination are calculated, and edge servers comprised in a combination, of which the quantity of total idle computation resources is greater than the quantity of the first computation resources, are determined to serve as the N edge servers for executing the offline task. That is, in a case that there is no edge server of which a quantity of the idle computation resources is greater than the quantity of the first computation resources among the M edge servers, a sum of quantities of the idle computation resources of the selected N edge servers is greater than the quantity of the first computation resources.

In an embodiment, the M edge servers may be allocated to P edge computing nodes, and each edge computing node comprises one or more edge servers. For example, the P edge computing nodes comprises edge computing node 1 and edge computing node 2, edge computing node 1 may comprises 5 edge servers, and edge computing node 2 may comprises M-5 edge server(s).

On such basis, when determining the N edge servers for executing the offline task from the M edge servers, L edge computing node(s) may be determined from the P edge computing nodes, where a quantity of idle computation resources of the Ledge computing nodes are greater than the quantity of the first computing power sources. Then, the N edge servers are selected from the determined L edge computing nodes. In specific implementation, determining the N edge servers for executing the offline task comprises following steps S1 to S3.

In step S1, the L edge computing nodes are selected from the P edge computing nodes, where a quantity of idle computation resources of the L edge computing nodes is greater than the quantity of the first computation resources.

The idle computation resources of the L edge computing nodes are a sum of respective idle computation resources of all edge computing nodes among the L edge computing nodes. The quantity of the node idle computation resources of the L edge computing nodes being greater than the quantity of the first computation resources may include any of following cases. In a first case, a quantity of the idle computation resources of each edge computing node among the L edge computing nodes is greater than the quantity of the first computation resources. In a second case, a quantity of idle computation resources of each edge computer node, among a part of the L edge computing nodes, is greater than the quantity of the first computation resources, and a quantity of total idle computation resources of the remaining part of the L edge computing nodes is greater than the quantity of the first computation resource. In a third case, a quantity of idle computation resources of each edge computing node among the L edge computing nodes is smaller than the quantity of the first computation resources, and a quantity of total idle computation resources of the L edge computing nodes is greater than the quantity of the first computation resources.

For the sake of brevity, when selecting the L edge computing nodes from the P edge computing nodes, only edge computing node(s) each of which a quantity of idle computation resources is greater than the quantity of the first computation resources may be selected. Alternatively, the edge computing node(s) each of which the quantity of idle computation resources is greater than the quantity of the first computation resources may be selected, and other edge computing nodes of which a quantity of total node idle computation resources is greater than the quantity of the first computation resources may be further selected. Alternatively, when there is no edge node of which a quantity of idle computation resources is greater than the quantity of the first computation resources among the P edge computing nodes, multiple computing nodes of which a quantity of total idle computation resources is greater than the quantity of the first computation resources have to be selected.

The idle computation resources of each edge computing node is determined based on the idle computation resources of each edge server comprised in such edge computing node. For example, quantities of the idle computation resources of multiple edge servers comprised in an edge computing node are added to obtain a quantity of the idle computation resources of the edge computing node. As another example, quantities of the idle computation resources of multiple edge servers comprised in an edge computing node are averaged to obtain a quantity representing the idle computation resources of the edge computing node. The foregoing two manners of calculating the idle computation resources of the node are merely exemplary, and the idle computation resources of the node may be calculated in other manner based on an actual requirement, which is not limited herein.

In step S2, at least one candidate edge server is determined from edge servers comprised in the L edge computing nodes based on an attribute of each edge server comprised in the L edge computing nodes.

In an embodiment, the attribute of each edge server may include an operating state of such edge server. The operating state may be an idle state or a busy state. The operating state of the edge server is determined to be the busy state when a load on an edge server exceeds an upper limit. The operating state of the edge server is determined to be the idle state when the load on the edge server is less than the upper load limit. The edge server in the busy state would not be scheduled for executing the offline task, and the edge server in the idle state can be scheduled for executing the offline task. Therefore, determining multiple candidate edge servers from the edge servers comprised in the L edge computing nodes based on the attribute of each edge server comprised in the L edge computing nodes comprises a following step. The edge servers, each of which the operating state is the idle state, are determined from the L edge computing nodes as the candidate edge servers.

In another embodiment, the attribute of each edge server includes a server-type group to which such edge server belongs. The server-type group includes a preset whitelist group and an ordinary group. Edge server(s) in the preset whitelist group are configured to run real-time cloud applications that have a high priority and should not be interrupted, and hence such edge server(s) would not be scheduled for executing the offline task. Edge server(s) in the ordinary group can be scheduled for executing the offline task. The edge server(s) in the preset whitelist group changes dynamically. In a case that an edge server in the preset whitelist group no longer executes a real-time task that has a high priority and should not be interrupted, such edge server is removed from the preset whitelist group and may be added into the ordinary group. Therefore, t determining multiple candidate edge servers from the edge servers comprised in the L edge computing nodes based on the attribute of each edge server comprised in the L edge computing nodes comprises a following step. The edge servers, each of which belongs to the ordinary group, are determined from the L edge computing nodes as the candidate edge servers.

In step S3, the N edge server(s) are determined from the at least one candidate edge server according to the idle computation resources of each edge server in the at least one candidate edge server and the first computation resources.

After the candidate edge server(s) are obtained in the step S2, the N edge servers are selected from the at least one candidate edge server. In an embodiment, the idle computation resources of each candidate edge server may be compared with the first computation resources. The edge server(s), each of which a quantity of idle computation resources is greater than the quantity of the first computation resources, are determined as the N edge server(s).

In another embodiment, the edge server(s) each of which a quantity of idle computation resources is greater than the quantity of the first computation resources, as well as multiple edge servers of which a quantity of total idle computation resources is greater than the quantity of the first computation resources, are determined to serve as the N edge servers. For example, the at least one candidate edge server comprises edge server 1, edge server 2, and edge server 3. The quantity of idle computation resources of edge server 1 is greater than the quantity of the first computation resources, the quantities of idle computation resources of edge server 2 and of the edge server 3 each is not greater than the quantity of the first computation resource, and a quantity of total idle computation resources of edge server 2 and edge server 3 is greater than the quantity of the first computation resources. In such case, edge server 1, edge server 2, and edge server 3 are determined to serve as the N edge servers for executing the offline task.

In another embodiment, there is no edge server of which a quantity of idle computation resources is greater than the quantity of the first computation resources among all edge servers, multiple edge servers of which a quantity of total idle computation resources is greater than the quantity of the first computation resources are determined to serve as the N edge servers.

The first computation resources may comprise one or both of the CPU computation resources or the GPU computation resources. The idle computation resources of each edge server comprise one or more of: the CPU computation resource, the GPU computation resource, the network bandwidth, the throughput, and the internal memory. In the foregoing description, the comparison, the addition, and the averaging between or among the computation resources are performed on computation resources of the same type. For example, the first computation resources comprises the GPU computation resources, and the GPU computation resource comprises half-precision FLOPS of the GPU, single-precision FLOPS of the GPU, and double-precision FLOPS of the GPU. The idle computation resource of each edge server comprises the GPU computation resources, and the GPU computation resources also comprises half-precision FLOPS of the GPU, single-precision FLOPS of the GPU, and double-precision FLOPS of the GPU. Specific comparison between the idle computation resources of an edge server and the first computation resources refer to comparing magnitude of two values of the half-precision FLOPS, magnitude of two values of the single-precision FLOPS, and magnitude of two values of the double-precision FLOPS.

In step S203, the offline task is distributed among the one or more edge servers through scheduling, such that all of the one or more edge servers is capable to execute the offline task using the respective idle computation resources while ensuring normal operation of the cloud application.

In an embodiment, distributing the offline task among the N edge servers through the scheduling may comprise following steps. The offline task is divided into N subtasks based on the idle computation resources of each edge server among the N edge servers. Each of the N subtasks corresponds to one edge server, and a quantity of idle computation resources of the edge server corresponding to each subtask is greater than a quantity of computation resources for executing such subtask. Each subtask is allocated to the edge server corresponding to such subtask, such that the edge server is capable to execute such subtask.

In an embodiment, a quantity of idle computation resource of each edge server of the N edge servers is greater than the quantity of the first computation resources, and dividing the offline task into the N subtasks based on the idle computation resources of each edge server comprises following steps. The offline task is evenly divided into N subtasks. A quantity of computation resources for executing each subtask is equal to an N^{th} of the quantity of the first computation resources. For example, the quantity of the first computation resources is x, the offline task is evenly divided into 5 subtasks, and hence the computation resources for executing each subtask is equal to x/5. The N subtasks are allocated to the N edge servers, respectively. In such case, each subtask may correspond to an arbitrary one of the N edge servers when establishing the one-to-one correspondence between the subtasks and the edge servers.

In another embodiment, there is no edge server of which a quantity of idle computation resources is greater than the quantity of the first computation resources among the N edge servers, and a quantity of total idle computation resources of the N edge servers is greater than the quantity of the first computation resources. In such case, dividing the offline task into the N subtasks based on the idle computation resources of each edge server comprises following steps. A subtask is allocated to each edge server, and a quantity of computation resources for executing the subtask is smaller than the quantity of idle computation resources of such edge server. Each subtask corresponds to a certain edge server. For example, the N edge servers comprise edge server 1, edge server 2, and edge server 3. The idle computation resources of edge server 1 is equal to x1, the idle computation resources of edge server 2 is equal to x2, and the idle computation resources of edge server 3 is equal to x3. The offline task is divided into 3 subtasks. Subtask 1 corresponds to edge server 1, and a quantity of computation resources for executing subtask 1 is less than or equal to x1. Subtask 2 corresponds to edge server 2, and a quantity of computation resources for executing subtask 2 is less than or equal to x2. Subtask 3 corresponds to edge server 3, and a quantity of computation resources for executing subtask 3 is less than or equal to x3.

In another embodiment, the N edge servers comprises a first part of edge servers, each of which a quantity of idle computation resources is greater than the quantity of the first computation resources, and further comprises a second part of edge servers, each of which a quantity of idle computation resources is not greater than the quantity of the first computation resources. In such case, dividing the offline task into the N subtasks based on the idle computation resources of each edge server may comprises following steps. A part of the offline task is further divided into multiple subtasks, each of which corresponding to each edge server in the second part of edge servers, according to the idle computation resources of each edge server in the second part of edge servers. Then, the remaining part of the offline task is evenly divided into multiple subtasks, and these subtasks are allocated to edge servers, respectively, in the first part of edge servers.

Hereinabove described are several exemplary manners of distributed scheduling the offline task to the N edge servers. In practice, another manner may be selected for distributing the offline stack to the N edge servers for execution, which is not specifically limited herein.

In an embodiment, when each edge server executes the corresponding subtask, the management server may monitor execution of the corresponding subtask at each edge server. In response to detecting an abnormity in the execution of the corresponding subtask at any edge server among the N edge servers, another edge server is selected for executing the subtask of corresponding to such edge server. In one embodiment, the management server monitors the execution of the corresponding subtask at each edge server based on an execution state reported by such edge server. The abnormity in the execution of the corresponding subtask at any edge server among the N edge servers may comprises a following case. The execution state reported by an edge server to the management server indicates that an abnormity occurs when such edge server executes of the corresponding subtask, or the management server does not receive the execution state reported by such edge server in long duration.

As discussed above, the offline task corresponds to the threshold of execution duration, and the N edge servers need to complete the offline task within such threshold. Since the offline task is divided into the N subtasks, each subtask also corresponds to a new threshold of execution duration, which may be equal to the threshold corresponding to the offline task. When executing the corresponding subtask, each edge server is required to report overtime prompt to the management server when determining that it cannot complete the subtask within the threshold corresponding to the subtask. The overtime prompt is configured to instruct the management server to schedule another edge server to execute the subtask corresponding to the edge server that reports the overtime prompt.

In embodiments of the present disclosure, when receiving the offline task to be executed, the first computation resources for executing the offline task may be estimated first, and then the N edge server(s) for executing the offline task are obtained. The quantity of the idle computation resources of the N edge server(s) is greater than the quantity of the first computation resources, and the idle computation resources of the N edge servers refer to a sum of respective idle computation resources of all of the N edge servers. The offline task is distributed among the N edge server(s) through scheduling, so that the N edge server(s) use the respective idle computation resources to execute the offline task while ensuring normal operation of a cloud application. Thereby, the offline task can be executed using the idle computation resource in each edge server while ensuring normal operation of the cloud application, regardless of peak or off-peak hours. A waste of computation resources is prevented in each edge server, a utilization rate of computation resources is improved, and a cost of operating the edge servers is reduced. In addition, N may be equal to or greater than 1. When N is equal to 1, centralized execution of the offline task can be ensured, which facilitates management on execution of the offline task. When N is greater than 1, distributed execution of the offline task is implemented, which can not only ensure a progress of executing the offline task but also distribute a load on all edge servers. Hence, the cloud application is ensured to operate normally at each edge server.

One a basis of the foregoing method for processing the service, another method for processing a service is provided according to embodiments of the present disclosure. Figure 3 is a schematic flowchart of another method for processing a service according to an embodiment of the present disclosure. The method as shown in Figure 3 may be executed by an edge server among N edge server(s), especially by a processor of the edge server. The edge server may be any of the N edge server(s) on which a cloud applications runs. The method as shown in Figure 3 may comprise following steps S301 and S302.

In step S301, an allocated offline task, which is distributed by a management server through scheduling, is received.

The allocated offline task may be an offline task received by the management server, or may be any subtask of N subtasks into which an offline task is divided. A quantity of idle computation resources of the edge server is greater than a quantity of computation resources for executing the allocated offline task.

The N subtasks are obtained through dividing the offline task based on idle computation resources of each edge server among the N edge servers for executing the offline task. A specific manner of division may refer to description concerning the step S203 as shown in Figure 2, and details are not repeated herein.

In an embodiment, before receiving the allocated offline task distributed by the management server through the scheduling, the edge server may acquire the quantity of idle computation resources thereof and report such quantity to the management server. The idle computation resources of the edge server may be determined based on total computation resources of the edge server and second computation resources required for operating the cloud application in the edge server.

In an embodiment, the second computation resources of the edge server are subtracted from the total computation resources of the edge server, and a result of the subtraction may serve as the idle computation resources of the edge server. That is, the idle computation resources of the edge server may refer to computation resources remaining in the edge server after the second computation resources for operating the cloud application are consumed.

In another embodiment, some computation resources may be reserved. The reserved computation resources and the second computation resources required for operating the cloud application are subtracted from the total computation resources of the edge server, and the remaining computation resources serve as the idle computation resources of the edge server. In such case, the cloud application may use the reserved computation resources when computation resources required for operating the cloud application increases suddenly, and it is not necessary to suspend execution of the allocated offline task.

In practice, different computation resources are required by different cloud applications, or by the same cloud application under different scenarios. When determining the second computation resource required for operating the cloud application, computation resources required by the cloud application under each scenario may be determined, and then the required computation resources having a smallest quantity among different scenarios serves as the second computation resources required for operating the cloud application by the edge server. Alternatively, the required computation resources having a largest quantity among different scenarios may serve as the second computation resources required for operating the cloud application by the edge server. Alternatively, computation resources having an averaged quantity among the required computation resources among different scenarios may serve as the second computation resources required for operating the cloud application by the edge server. The second computation resources may include any one or more of: the CPU computation resources, the GPU computation resources, the internal memory, the network bandwidth, and the throughput. The CPU computation resource generally comprises one or both the FLOPS of the CPU and the OPS of the CPU, and the GPU computation resource may comprise one or both of the FLOPS of the GPU and the OPS of the GPU. Since a single edge server and an edge computing node to which the edge server belongs both affect the idle computation resources, the network bandwidth is determined based on an internal network bandwidth and an external network bandwidth. In an embodiment, a smaller one between the internal network bandwidth and the external network bandwidth serves as the network bandwidth of the edge server.

In step S302, the allocated offline task is executed using the idle computation resources of the edge server while ensuring normal operation of the cloud application.

As discussed above, the offline task as well as each subtask obtained by dividing the offline task corresponds to the threshold of execution duration, and thus the allocated offline task also corresponds to its threshold of execution duration. In an embodiment, executing the allocated offline task using the idle computation resources of the edge server comprises following steps. Duration required for completing execution of the allocated offline task is determined based on the idle computation resources of the edge server. The allocated offline task is executed using the idle computation resources of the edge server in response to the duration being less than the threshold of execution duration corresponding to the allocated offline task.

In an embodiment, the idle computation resources of each edge server may refer to the computation resources remaining in the edge server when the second computation resources required for operating the cloud application are consumed. When executing the allocated offline task, the edge server may detect that a quantity of computation resources required for operating the cloud application at the edge server increases suddenly and becomes greater than a quantity of the second computation resources. In such case, the edge server may need to release computation resources in order to ensure the normal operation of the cloud application. In specific implementation, dwelling duration of the allocated offline task in the edge server may be obtained, and computation-resource release is performed according to a relationship between the dwelling duration and the threshold of execution duration corresponding to the allocated offline task.

A difference between the dwelling duration and the threshold of execution duration being greater than a threshold of time difference indicates that there is still enough time to execute the allocated offline task. In such case, the computation-resource release may comprise suspending execution of the allocated offline task, and the execution of the allocated offline task may be continued in response to the quantity of the computation resources required for operating the cloud application becoming less than or equal to the quantity of the second computation resources. The difference between the dwelling duration and the threshold of execution duration being less than the threshold of time difference indicates that there is not much time left for executing the allocated offline task. In such case, it may be impossible to wait for the edge server to regain adequate idle computation resources and then continue executing the allocated offline task. The execution of the allocated offline task may be terminated, and the management server is prompted to select another edge server, which has adequate idle computation resources, for executing the allocated offline task. Therefore, when the difference between the dwelling duration and the threshold of execution duration is less than the threshold of time difference, the computation-resource release may comprise terminating execution of the allocated offline task.

In an embodiment, the computation-resource release is suspending the execution of the allocated offline task. In such case, the edge server may detect the idle computation resources of the edge server periodically after the computation-resource release. In response to detecting that a quantity of the idle computation resources of the edge server is greater than the quantity of the first computation resources, the execution of the allocated offline task is continued. In response to the quantity of the idle computation resources of the edge server being less than the quantity of the first computation resources, and the difference between the dwelling duration of the allocated offline task of the edge server and the threshold of execution duration being less than the threshold of time difference, the execution of the allocated offline task is terminated. That is, when detecting the idle computation resources of the edge server, the edge server may be aware of that the idle computation resources of the edge server is insufficient for executing the allocated offline task, and there is not much time before reaching the threshold of execution duration. In such case, the edge server can only abandon continuing the allocated offline task and prompt the management server to schedule the allocated offline task to another edge server for execution.

In an embodiment, when executing the allocated offline task, the edge server transmits the overtime prompt to the management server in response to predicting that the edge server cannot complete the allocated offline task within the threshold of execution duration. The overtime prompt is configured to inform that time consumed by the edge server for completing execution of the allocated offline task would exceed the threshold of execution duration corresponding to the allocated offline task, and the management server needs to schedule another edge server for executing the allocated offline task.

In embodiments of the present disclosure, the edge server receives the allocated offline task distributed by the management server through scheduling. The allocated offline task may be the offline task received by the management server, or the subtask corresponding to the edge server among the N subtasks. The N subtasks may be obtained by dividing the offline task based on the idle computation resources of the N edge servers, respectively, for executing the offline task. The allocated offline task is executed using the idle computation resources of the edge server while ensuring normal operation of the cloud application. Thereby, the offline task can be executed using the idle computation resource in each edge server while ensuring normal operation of the cloud application, regardless of peak or off-peak hours. Hence, a waste of computation resources is prevented in each edge server, a utilization rate of computation resources is improved, and a cost of operating the edge servers is reduced.

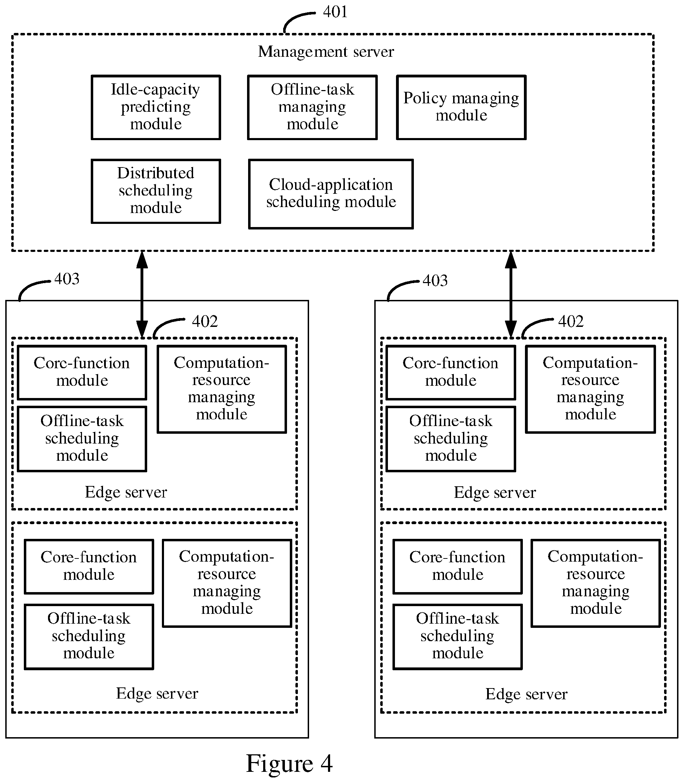

On a basis of the foregoing embodiments, a system for processing a service is provided according to embodiments of the present disclosure. Reference is made to Figure 4, which is a schematic structural diagram of a system for processing a service according to an embodiment of the present disclosure. The system as shown in Figure 4 may comprise a management server 401 configured to manage edge computing nodes, and at least one edge server 402. The at least one edge server 402 is allocated to P edge computing nodes 403. Each edge computing node 403 comprises one or more edge servers.

In an embodiment, the each edge server 402 comprises a core-function module. The core-function module is mainly configured to implement a core function of the cloud application. For example, the core-function module for cloud gaming is configured to perform rendering, logic computation, and other functions of the game. Herein a requirement of such module on computation resources is of the highest priority. That is, no matter what offline task is executed in the edge server, sufficient computation resources would be allocated to such module as long as the module requires additional computation resources.

In an embodiment, each edge server 402 may further comprise a computation-resource managing module. The computation-resource managing module is configured to manage the computation resources of the edge server, so as to ensure that a requirement of all local real-time online tasks does not exceed an upper limit of physical computation resources. Main functions of the computation-resource managing module may comprise following aspects.
(1) Collection and reporting of local idle computation resources in real time. Relevant data is reported to the management server, and serves as a basis for subsequent schedule on offline tasks. In such case, the local idle computation resources may be directly reported to the management server 401. Alternatively, occupied local computation resources and total available computation resources may be reported to the management server 401, and the management server 401 calculate a quantity of the idle computation resources of the edge server based on the occupied computation resources and the total available computation resources.
(2) Management of local computation resources. When the computing resources required by real-time online tasks (which mainly refers to the cloud application herein) exceeds an upper limit of the local computation resources that are currently available and an offline task is running, an offline-task scheduling module is prompted to release computing resources. In a case that there is no offline task that is running, or in a case that the required computing resources still exceeds the upper limit even if all offline tasks are suspended, the management server is prompted to schedule a part of cloud applications to other edge server(s).

In an embodiment, the edge server 402 may further comprise the offline-task scheduling module. The offline-task scheduling module is mainly configured to further schedule an offline task, which has been distributed by the management server to the edge server through scheduling. Its main functions may comprise following aspect.
(1) Activation of a task. After receiving the offline task (which may refer to a entire offline task or a subtask obtained by dividing the entire offline task) issued by the management server, it is determined whether the local idle computation resources meet a requirement, which is mainly determining whether the local idle computation resources is capable to complete the offline task within the threshold of execution duration. In case of positive determination, the offline task is activated. The offline-task scheduling module may further check a status of local execution of the offline task periodically. In a case that there is an offline task suspended due to insufficient idle computing resources, current idle computation resources are checked. In a case that the current idle computation resources are still insufficient, the dwelling duration of the offline task in the edge server is checked. In a case that a difference between the dwelling duration and the threshold of execution duration is less than the threshold of time difference, or in a case that the dwelling duration exceeds the threshold of execution duration, the execution of the offline task is terminated.
(2) Release of the computing resources. In a case that the computation-resource managing module detects that current computation resources are insufficient for executing the real-time online task(s), it is prompted to release computation resources. The computation-resource release may include suspending the execution of the offline task (which there is still sufficient time to complete, that is, the difference between the dwelling duration of the offline task in the edge server and the threshold of execution duration is greater than the threshold of time difference), or terminating the execution of the offline task (which needs to be completed immediately, that is, the difference between the dwelling duration of the offline task in the edge server and the threshold of execution duration is less than the threshold of time difference).
(3) Suspension of the offline task. Execution of the offline task is suspended according to an instruction of the computation-resource release.
(4) Completion of the offline task. When execution of the offline task is completed, temporary data in the edge server is cleared, and calculation result(s) are reported to the management server.
(5) Termination of the offline task. In a case that the local idle computation resources is insufficient for completing the offline task within the threshold of execution duration, or in a case that there is an abnormity, for example, the edge server needs to be shut down for maintenance, execution of the offline task is terminated and the offline task is allocated to other edge server(s) by the management server.

In an embodiment, the management server 401 may include an idle-capacity predicting module. The idle-capacity predicting module is mainly configured to calculate a quantity of the idle computation resources of each edge server and a quantity of idle computation resources of each edge computing node according to computation-resource data reported by each edge server.

In an embodiment, the edge server 401 may further comprise an offline-task managing module. Main functions of the offline-task managing module may comprise following aspects.
(1) Task reception. An offline task uploaded by a user is received and classified. The classification may include determining whether the offline task has a requirement on timeliness, whether the main load of executing the offline task is on the GPU or on the CPU, and whether the offline task can be executed in a distributed manner.
(2) Task allocation. The computation resources for executing the offline task are compared with the idle computation resources of each edge server, so as to allocate the offline task to appropriate edge server(s). In a case that one edge server cannot complete the offline task solely, the offline task is transferred to a distributed-scheduling module for allocation.
(3) Process management of a task. The status of executing a task, which is reported by an edge server executing the cloud application, is received. When execution of the offline task is determined to be completed according to the reported status, a result of the execution is verified and fed back to the user. When execution of the offline task is determined to be abnormal according to the reported status or the status reported by the edge server has not been received for a long time, the offline task is scheduled to another edge server.

In an embodiment, the management server 401 further comprises a policy managing module. Main functions of the policy managing module may comprise following aspects.
(1) Whitelist management. Some edge servers is required to execute cloud applications that have a high priority and should not be interrupted, and these edge servers need to be added into a preset whitelist to ensure that no offline task is scheduled to these edge servers. Moreover, these edge servers may not be always in the preset whitelist, and an edge server is removed from the preset whitelist when finish execution of the high-priority cloud application.
(2) Management of an edge-server state. An operating state of an edge server includes a busy state and an idle state. In a case that an edge server reports that a load on it exceeds an upper limit, the operating state of the edge server is set as the busy state, so as to prevent allocating a new offline task and a new cloud application to such edge server. In a case that an edge server informs the management server of it being idle currently, the operating state of the edge server is modified to the idle state, and a quantity of the idle computation resources of the edge server may be calculated.

In an embodiment, the management server 401 may further comprise the distributed-scheduling module. Main functions of the distributed-scheduling module may include following aspects.
(1) Task scheduling. A large offline task is divided into multiple subtasks according to idle computation resources of each edge server for executing the offline task, and each subtask is allocated to one edge server for its execution. When each edge servers has completed execution of the respective subtask, a result of the execution is reported to the management server 401, and the management server summarizes the reported results to obtain a final execution result.
(2) Management on abnormal edge servers. In a case that there is an abnormity, for example, malfunction, disconnection, or overtime calculation, in real-time computation at a certain edge server, the abnormity is timely recognized, and the offline task is scheduled to other edge server(s) for execution.

In an embodiment, the management server 401 may further comprise a cloud-application scheduling module, which configured to allocate the cloud applications dynamically according to the computation resources of each edge server and the computation resources of each edge computing node. Overloading on a single edge server is prevented.

In the foregoing system, when receiving the offline task to be executed, the management server first estimates a quantity of computation resources for executing the offline task, and then determines the N edge servers for executing the offline task. A quantity of the idle computation resources of the N edge servers is greater than a quantity of the first computation resources. The idle computation resources of the N edge servers refer to a sum of respective idle computation resources of edge servers. The offline task is distributed among the N edge servers through scheduling.

After any edge server in the N edge servers receives the offline task distributed by the management server through the scheduling, the offline task is executed using the idle computation resources of the edge server while ensuring normal operation of the cloud application. Thereby, the offline task can be executed using the idle computation resource in each edge server while ensuring normal operation of the cloud application, regardless of peak or off-peak hours. Hence, a waste of computation resources is prevented in each edge server, a utilization rate of computation resources is improved, and a cost of operating the edge servers is reduced.

In addition, N may be equal to or greater than 1. When N is equal to 1, centralized execution of the offline task can be ensured, which facilitates management on execution of the offline task. When N is greater than 1, distributed execution of the offline task is implemented, which can not only ensure a progress of executing the offline task but also distribute a load on all edge servers. Hence, the cloud application is ensured to operate normally at each edge server.

Although the steps in the foregoing embodiment are depicted sequentially according to a direction of arrows in the flowcharts, these steps are not necessarily performed in the sequence as indicated by the arrows. Unless otherwise explicitly specified, a sequence of executing the steps is not strictly limited, and the steps may be performed in another sequence. Moreover, at least some of the steps in each embodiment may comprise multiple sub-steps or multiple stages. The sub-steps or the stages are not necessarily performed simultaneously, but may be performed at different moments. The sub-steps or the stages are not necessarily sequentially performed, but may be performed alternately, or may be interleaved, with other steps or with at least a part of sub-steps or stages in the other steps.

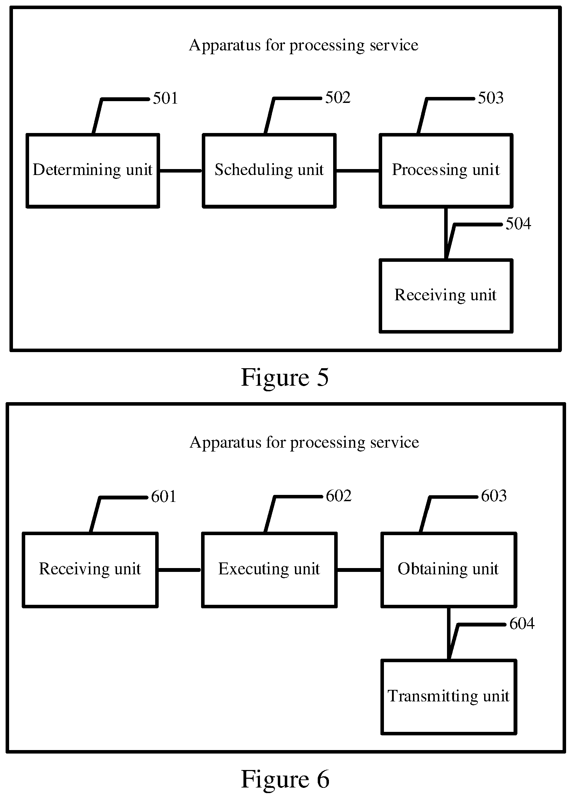

On a basis of the foregoing method embodiments, an apparatus for processing a service is provided according to embodiments of the present disclosure. Reference is made to Figure 5, which is a schematic structural diagram of an apparatus for processing a service according to an embodiment of the present disclosure. The apparatus as shown in Figure 5 may comprise a determining unit 501 and a scheduling unit 502.

The determining unit 501 is configured to determine first computation resources for executing an offline task.

The determining unit 501 is further configured to determine one or more edge servers, of which a quantity is N, for executing the offline task, where a cloud application runs on the one or more edge servers, a quantity of idle computation resources of the one or more edge servers is greater than a quantity of the first computation resources, and the idle computation resources of the one or more edge servers is a sum of respective idle computation resources of all edge servers in the one or more edge servers.

The scheduling unit 502 is configured to distribute the offline task among the one or more edge servers through scheduling to enable all of the one or more edge servers to execute the offline task using the respective idle computation resources while ensuring normal operation of the cloud application.

In an embodiment, when distributing the offline task among the N edge servers through the scheduling, the scheduling unit 502 is configured to: divide the offline task into N subtasks based on idle computation resources of each of the N edge servers, where the N subtasks and the N edge servers are in a one-to-one correspondence, and a quantity of the idle computation resources of each of the N edge servers is greater than a quantity of computation resources for executing the corresponding subtask; and allocate each of the N subtasks to the corresponding edge server to enable the corresponding edge server to execute said subtask.

In an embodiment, the cloud application is deployed to one or more edge servers, of which a quantity is M, for execution, the one or more edge servers are allocated to one or more edge computing nodes, of which a quantity is P, and each of the one or more edge computing node has at least one of the one or more edge servers, where M and P each is an integer greater than or equal to 1. When determining the one or more edge servers for executing the offline task, the determining unit 501 is configured to: select at least one edge computing node, of which a quantity is L, from the one or more edge computing nodes, where a quantity of idle computation resources of the at least one edge computing node is greater than the quantity of the first computation resources, the idle computation resources of the at least one edge computing node is a sum of respective idle computation resources of all of the at least one edge computing node, and the idle computation resources of each of the one or more edge computing nodes is determined according to the respective idle computation resources of the at least one edge server deployed in said edge computing node; determine at least one candidate edge server from the at least one edge computing node based on an attribute of each edge server in the at least one edge computing nodes; and determine the one or more edge servers from the at least one candidate edge server according to idle computation resources of each of the at least one candidate edge server and the first computation resources.

In an embodiment, the attribute of each edge server comprises an operating state of said edge server, where the operating state indicates said edge server being idle or busy. When determining the at least one candidate edge server from the at least one edge computing node, the determining unit 501 is configured to: determine, from the at least one edge computing node, an edge server of which the operating state indicates being idle as one of the at least one candidate edge server.

In an embodiment, the attribute of each edge server comprises a server-type group to which said edge server belongs, where the server-type group indicates whether said server is in a whitelist. When determining the at least one candidate edge server from the at least one edge computing nodes, the determining unit 501 is configured to: determine, from the at least one edge computing node, an edge server of which the server-type group indicates the edge server not in the whitelist as one of the at least one candidate edge server.

In an embodiment, the apparatus further comprises a processing unit 503. The processing unit is configured to: monitor, when each of the N edge servers executes the corresponding subtask, execution of the corresponding subtask at said edge server, and reselect another edge server for executing the corresponding subtask in response to monitoring an abnormity in the execution of the corresponding subtask at such edge server.

In an embodiment, each of the N subtasks corresponds to a threshold of execution duration. The apparatus further comprises a receiving unit 504. The receiving unit is configured to: receive, when each of the N edge servers executes the corresponding subtask, an overtime prompt reported by an edge server among the N edge servers, where the overtime prompt indicates that duration required for executing the corresponding subtask by the edge server is greater than the threshold corresponding to the corresponding subtask, and another edge server is required to be determined for executing the corresponding subtask.

In an embodiment, the first computation resources comprise one or more of: GPU computation resources, CPU computation resources, an internal memory, a network bandwidth, and a network throughput. The GPU computation resources comprise one or both of FLOPS of a GPU and OPS of the GPU. The CPU computation resources comprise one or both of FLOPS of a CPU and OPS of the CPU.

In an embodiment, when determining the first computation resources for executing the offline task, the determining unit 501 is configured to: determine a degree of computation complexity corresponding to a type of the offline task according to correspondence between types of tasks and degrees of computation complexity; search history offline tasks for at least one matching task, where a computation complexity corresponding to each of the at least one matching task matches the determined computation complexity; and estimate the first computation resources based on computation resources consumed for executing each matching task.

In an embodiment, steps involved in the method as shown in Figure 2 may be executed by units in the apparatus as shown in Figure 5. For example, the steps S201 and S202 in Figure 2 may be executed by the determining unit 501 in Figure 5, and the step S203 may be executed by the scheduling unit 502 as shown in Figure 5.

In another embodiment, the units as shown in Figure 5 may be respectively replaced or wholly integrated into one or more other units, or one or more units as shown in Figure 5 may be further split into multiple units each having fewer functions, which can implement the same operations without affecting a technical effect of the corresponding embodiment. The foregoing units are delimited based on logical functions. In practice, a function of a unit may be implemented by multiple units, or functions of multiple units are implemented by one unit. In another embodiment, the apparatus may further comprise another unit. In practice, the foregoing functions may be implemented with coordination of another unit, or may be implemented by multiple coordinating units.

In another embodiment, computer-readable instructions (including a program code) capable of performing each step in the method as shown in Figure 2 may be executed on a general-purpose computing device, such as a computer, which comprises a processing element and a storage element, for example, comprises a CPU, a random access memory (RAM), and a read-only memory (ROM), in order to construct the apparatus as shown in Figure 5, and/or implement the method for processing the service according to embodiments of the present disclosure. The computer-readable instructions may be recorded in, for example, a computer storage medium, and may be loaded and executed in the foregoing node device through the computer storage medium.

In embodiments of the present disclosure, when receiving the offline task to be executed, the first computation resources for executing the offline task may be estimated first, and then the N edge server(s) for executing the offline task are obtained. The quantity of the idle computation resources of the N edge server(s) is greater than the quantity of the first computation resources, and the idle computation resources of the N edge servers refer to a sum of respective idle computation resources of all of the N edge servers. The offline task is distributed among the N edge server(s) through scheduling, so that the N edge server(s) use the respective idle computation resources to execute the offline task while ensuring normal operation of a cloud application. Thereby, the offline task can be executed using the idle computation resource in each edge server while ensuring normal operation of the cloud application, regardless of peak or off-peak hours. A waste of computation resources is prevented in each edge server, a utilization rate of computation resources is improved, and a cost of operating the edge servers is reduced. In addition, N may be equal to or greater than 1. When N is equal to 1, centralized execution of the offline task can be ensured, which facilitates management on execution of the offline task. When N is greater than 1, distributed execution of the offline task is implemented, which can not only ensure a progress of executing the offline task but also distribute a load on all edge servers. Hence, the cloud application is ensured to operate normally at each edge server.

On a basis of the foregoing method embodiments, another apparatus for processing a service is provided according to embodiments of the present disclosure. Reference is made to Figure 6, which is a schematic structural diagram of another apparatus for processing a service according to an embodiment of the present disclosure. The apparatus as shown in Figure 5 may comprise a receiving unit 601 and an executing unit 602.

The receiving unit 601 is configured to receive an allocated offline task, which is distributed by a management server through scheduling, where the allocated offline task comprises an offline task received by the management server, or the allocated offline task comprises a subtask which corresponds to an edge server among N subtasks, the N subtasks are obtained by dividing the offline task based on idle computation resources of each edge server in one or more edge servers, of which a quantity is N, for executing the offline task, and a cloud application runs on the one or more edge servers.

The executing unit 602 is configured to execute the allocated offline task using the idle computation resources of the edge server while ensuring normal operation of the cloud application.

In an embodiment, the allocated offline task corresponds to a threshold of execution duration. When executing the allocated offline task using the idle computation resources of the edge server, the execution unit 602 is configured to: determine duration required for completing execution of the allocated offline task based on idle computation resources of the edge server; and execute the allocated offline task using the idle computation resources of the edge server in response to the required duration being less than the threshold.

In an embodiment, the idle computation resources of the edge server are computation resources remaining in the edge server when second computation resources required for operating the cloud application are consumed in the edge server. The apparatus further comprises an obtaining unit 603.

The obtaining unit 603 is configured to obtain, when the allocated offline task is being executed, dwelling duration of the allocated offline task in the edge server in response to detecting that a quantity of current computation resources required for operating the cloud application in the edge server is greater than a quantity of the second computation resources.

The execution unit 602 is configured to perform computation-resource release according to a relationship between the dwelling duration and the threshold of execution duration, where the computation-resource release comprises suspending execution of the allocated offline task or terminating the execution of the allocated offline task, the computation-resource release comprises suspending the execution of the allocated offline task in response to a difference between the dwelling duration and the threshold of execution duration being greater than a threshold of time difference, and the computation-resource release comprises terminating the execution of the allocated offline task in response to the difference being less than the threshold of time difference.

In an embodiment, the computation-resource release comprises suspending the execution of the allocated offline task, and the execution unit 602 is further configured to: detect the idle computation resources of the edge server periodically; continue the execution of the allocated offline task in response to the quantity of the idle computation resources of the edge server is greater than the quantity of the first computation resources; and terminate the execution of the allocated offline task in response to the quantity of the idle computation resources of the edge server being less than the quantity of the first computation resources and the difference being less than the threshold of time difference.

In an embodiment, the apparatus further comprises a transmitting unit 604. The transmitting unit 604 is configured to transmit, when the edge server executes the allocated offline task, an overtime prompt to the management server in response to determining that duration required for executing the allocated offline task by the edge server is greater than the threshold of execution duration, where the overtime prompt indicates that the duration required for executing the allocated offline task by the edge server is greater than the threshold of execution duration to enable the management server to determine another edge server to execute the allocated offline task.

In an embodiment, steps involved in the method as shown in Figure 3 may be executed by units in the apparatus as shown in Figure 6. For example, the step S301 in Figure 3 may be executed by the determining unit 601 in Figure 6, and the step S302 may be executed by the scheduling unit 602 as shown in Figure 6.

In another embodiment, the units as shown in Figure 6 may be respectively replaced or wholly integrated into one or more other units, or one or more units as shown in Figure 6 may be further split into multiple units each having fewer functions, which can implement the same operations without affecting a technical effect of the corresponding embodiment. The foregoing units are delimited based on logical functions. In practice, a function of a unit may be implemented by multiple units, or functions of multiple units are implemented by one unit. In another embodiment, the apparatus may further comprise another unit. In practice, the foregoing functions may be implemented with coordination of another unit, or may be implemented by multiple coordinating units.

In another embodiment, computer-readable instructions (including a program code) capable of performing each step in the method as shown in Figure 3 may be executed on a general-purpose computing device, such as a computer, which comprises a processing element and a storage element, for example, comprises a CPU, a random access memory (RAM), and a read-only memory (ROM), in order to construct the apparatus as shown in Figure 6, and/or implement the method for processing the service according to embodiments of the present disclosure. The computer-readable instructions may be recorded in, for example, a computer storage medium, and may be loaded and executed in the foregoing node device through the computer storage medium.

In embodiments of the present disclosure, the edge server receives the allocated offline task distributed by the management server through scheduling. The allocated offline task may be the offline task received by the management server, or the subtask corresponding to the edge server among the N subtasks. The N subtasks may be obtained by dividing the offline task based on the idle computation resources of the N edge servers, respectively, for executing the offline task. The allocated offline task is executed using the idle computation resources of the edge server while ensuring normal operation of the cloud application. Thereby, the offline task can be executed using the idle computation resource in each edge server while ensuring normal operation of the cloud application, regardless of peak or off-peak hours. Hence, a waste of computation resources is prevented in each edge server, a utilization rate of computation resources is improved, and a cost of operating the edge servers is reduced.

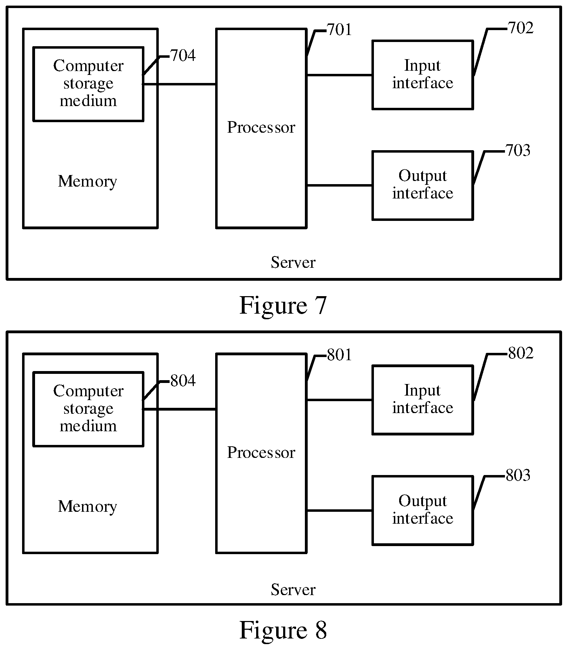

On a basis of the foregoing method embodiments and the foregoing apparatus embodiments, a server is provided according to an embodiment of the present disclosure. Reference is made to Figure 7, which is a schematic structural diagram of a server according to an embodiment of the present disclosure. The server as shown in Figure 7 may correspond to the afore-mentioned management server. The server as shown in Figure 7 may comprise a processor 701, an input interface 702, an output interface 703, and a computer storage medium 704. The processor 701, the input interface 702, the output interface 703, and the computer storage medium 704 may be connected via a bus or in another manner.

The computer storage medium 704 may be stored in a memory of the server. The computer storage medium 704 is configured to store computer-readable instructions, and the processor 701 is configured to execute the computer-readable instructions stored in the computer storage medium 704. The processor 701 (or called central processing unit, CPU) is a core of computation and control of the server, and is capable to execute one or more computer-readable instructions to perform following operations.

First computation resources for executing an offline task are determined. One or more edge servers, of which a quantity is N, for executing the offline task are determined, where a cloud application runs on the one or more edge servers, a quantity of idle computation resources of the one or more edge servers is greater than a quantity of the first computation resources, and the idle computation resources of the one or more edge servers is a sum of respective idle computation resources of all edge servers in the one or more edge servers. The offline task are distributed among the one or more edge servers through scheduling to enable all of the one or more edge servers to execute the offline task using the respective idle computation resources while ensuring normal operation of the cloud application.

In embodiments of the present disclosure, when receiving the offline task to be executed, the first computation resources for executing the offline task may be estimated first, and then the N edge server(s) for executing the offline task are obtained. The quantity of the idle computation resources of the N edge server(s) is greater than the quantity of the first computation resources, and the idle computation resources of the N edge servers refer to a sum of respective idle computation resources of all of the N edge servers. The offline task is distributed among the N edge server(s) through scheduling, so that the N edge server(s) use the respective idle computation resources to execute the offline task while ensuring normal operation of a cloud application. Thereby, the offline task can be executed using the idle computation resource in each edge server while ensuring normal operation of the cloud application, regardless of peak or off-peak hours. A waste of computation resources is prevented in each edge server, a utilization rate of computation resources is improved, and a cost of operating the edge servers is reduced. In addition, N may be equal to or greater than 1. When N is equal to 1, centralized execution of the offline task can be ensured, which facilitates management on execution of the offline task. When N is greater than 1, distributed execution of the offline task is implemented, which can not only ensure a progress of executing the offline task but also distribute a load on all edge servers. Hence, the cloud application is ensured to operate normally at each edge server.

On a basis of the foregoing method embodiments and the foregoing apparatus embodiments, another server is provided according to an embodiment of the present disclosure. Reference is made to Figure 8, which is a schematic structural diagram of another server according to an embodiment of the present disclosure. The server as shown in Figure 8 may correspond to the afore-mentioned edge server. The server as shown in Figure 8 may comprise a processor 801, an input interface 802, an output interface 803, and a computer storage medium 804. The processor 801, the input interface 802, the output interface 803, and the computer storage medium 804 may be connected via a bus or in another manner.

The computer storage medium 804 may be stored in a memory of the server. The computer storage medium 804 is configured to store computer-readable instructions, and the processor 801 is configured to execute the computer-readable instructions stored in the computer storage medium 804. The processor 801 (or called central processing unit, CPU) is a core of computation and control of the server, and is capable to execute one or more computer-readable instructions to perform following operations.

An allocated offline task, which is distributed by a management server through scheduling, is received, where the allocated offline task comprises an offline task received by the management server, or the allocated offline task comprises a subtask which corresponds to an edge server among N subtasks, and the N subtasks are obtained by dividing the offline task based on idle computation resources of each edge server in the one or more edge servers.

The allocated offline task is executed using the idle computation resources of the edge server while ensuring normal operation of the cloud application.

In embodiments of the present disclosure, the edge server receives the allocated offline task distributed by the management server through scheduling. The allocated offline task may be the offline task received by the management server, or the subtask corresponding to the edge server among the N subtasks. The N subtasks may be obtained by dividing the offline task based on the idle computation resources of the N edge servers, respectively, for executing the offline task. The allocated offline task is executed using the idle computation resources of the edge server while ensuring normal operation of the cloud application. Thereby, the offline task can be executed using the idle computation resource in each edge server while ensuring normal operation of the cloud application, regardless of peak or off-peak hours. Hence, a waste of computation resources is prevented in each edge server, a utilization rate of computation resources is improved, and a cost of operating the edge servers is reduced.

A computer storage medium (memory) is further provided according to embodiments of the present disclosure. The computer storage medium is a memory device of a server and is configure to store a program and data. Herein the computer storage medium may include an internal storage medium of the server, and may include an expanded storage medium supported by the server. The computer storage medium provides a storage space in which an operating system of the server is stored. Moreover, computer-readable instructions configured to be loaded and executed by the processor 701 or the processor 801 is further stored in the storage space. Herein the computer storage medium may be a high-speed RAM memory, or a non-volatile memory, for example, at least one magnetic disk memory. In an embodiment, the computer storage medium may be at least one computer storage medium which is distant from the processor.

In an embodiment, the computer-readable instructions stored in the computer storage medium can be loaded by the processor 701 to perform following operations.

First computation resources for executing an offline task are determined. One or more edge servers, of which a quantity is N, for executing the offline task are determined, where a cloud application runs on the one or more edge servers, a quantity of idle computation resources of the one or more edge servers is greater than a quantity of the first computation resources, and the idle computation resources of the one or more edge servers is a sum of respective idle computation resources of all edge servers in the one or more edge servers. The offline task are distributed among the one or more edge servers through scheduling to enable all of the one or more edge servers to execute the offline task using the respective idle computation resources while ensuring normal operation of the cloud application.

In an embodiment, when distributing the offline task among the N edge servers through the scheduling, the processor 701 performs following operations.

The offline task is divided into N subtasks based on idle computation resources of each of the N edge servers, where the N subtasks and the N edge servers are in a one-to-one correspondence, and a quantity of the idle computation resources of each of the N edge servers is greater than a quantity of computation resources for executing the corresponding subtask. Each of the N subtasks is allocated to the corresponding edge server to enable the corresponding edge server to execute said subtask.

In an embodiment, the cloud application is deployed to one or more edge servers, of which a quantity is M, for execution, the one or more edge servers are allocated to one or more edge computing nodes, of which a quantity is P, and each of the one or more edge computing node has at least one of the one or more edge servers, where M and P each is an integer greater than or equal to 1. When determining the one or more edge servers for executing the offline task, the processor 801 performs following operations.

At least one edge computing node, of which a quantity is L, is selected from the one or more edge computing nodes, where a quantity of idle computation resources of the at least one edge computing node is greater than the quantity of the first computation resources, the idle computation resources of the at least one edge computing node is a sum of respective idle computation resources of all of the at least one edge computing node, and the idle computation resources of each of the one or more edge computing nodes is determined according to the respective idle computation resources of the at least one edge server deployed in said edge computing node.

At least one candidate edge server is determined from the at least one edge computing node based on an attribute of each edge server in the at least one edge computing nodes.

The one or more edge servers are determined from the at least one candidate edge server according to idle computation resources of each of the at least one candidate edge server and the first computation resources.

In an embodiment, the attribute of each edge server comprises an operating state of said edge server, where the operating state indicates said edge server being idle or busy. When determining the at least one candidate edge server from the at least one edge computing node based on the attribute of each edge server in the at least one edge computing nodes, the processor 801 performs a following operation. An edge server of which the operating state indicates being idle determine is determined from the at least one edge computing node as one of the at least one candidate edge server.

In an embodiment, the attribute of each edge server comprises a server-type group to which said edge server belongs, where the server-type group indicates whether said server is in a whitelist. When determining the at least one candidate edge server from the at least one edge computing nodes based on the attribute of each edge server in the at least one edge computing nodes, the processor 801 performs a following step. An edge server of which the server-type group indicates the edge server not in the whitelist is determined from the at least one edge computing node as one of the at least one candidate edge server.

In an embodiment, the processor 701 is further configured to: monitor, when each of the N edge servers executes the corresponding subtask, execution of the corresponding subtask at said edge server, and reselect another edge server for executing the corresponding subtask in response to monitoring an abnormity in the execution of the corresponding subtask at such edge server.

In an embodiment, each of the N subtasks corresponds to a threshold of execution duration. The processor 701 is further configured to: receive, when each of the N edge servers executes the corresponding subtask, an overtime prompt reported by an edge server among the N edge servers, where the overtime prompt indicates that duration required for executing the corresponding subtask by the edge server is greater than the threshold corresponding to the corresponding subtask, and another edge server is required to be determined for executing the corresponding subtask.

In an embodiment, the first computation resources comprise one or more of: GPU computation resources, CPU computation resources, an internal memory, a network bandwidth, and a network throughput. The GPU computation resources comprise one or both of FLOPS of a GPU and OPS of the GPU. The CPU computation resources comprise one or both of FLOPS of a CPU and OPS of the CPU.

In an embodiment, when determining the first computation resources for executing the offline task, the processor 701 performs following steps. A degree of computation complexity corresponding to a type of the offline task is determined according to correspondence between types of tasks and degrees of computation complexity. History offline tasks are searched for at least one matching task, where a computation complexity corresponding to each of the at least one matching task matches the determined computation complexity. The first computation resources are estimated based on computation resources consumed for executing each matching task.

In embodiments of the present disclosure, when receiving the offline task to be executed, the first computation resources for executing the offline task may be estimated first, and then the N edge server(s) for executing the offline task are obtained. The quantity of the idle computation resources of the N edge server(s) is greater than the quantity of the first computation resources, and the idle computation resources of the N edge servers refer to a sum of respective idle computation resources of all of the N edge servers. The offline task is distributed among the N edge server(s) through scheduling, so that the N edge server(s) use the respective idle computation resources to execute the offline task while ensuring normal operation of a cloud application. Thereby, the offline task can be executed using the idle computation resource in each edge server while ensuring normal operation of the cloud application, regardless of peak or off-peak hours. A waste of computation resources is prevented in each edge server, a utilization rate of computation resources is improved, and a cost of operating the edge servers is reduced. In addition, N may be equal to or greater than 1. When N is equal to 1, centralized execution of the offline task can be ensured, which facilitates management on execution of the offline task. When N is greater than 1, distributed execution of the offline task is implemented, which can not only ensure a progress of executing the offline task but also distribute a load on all edge servers. Hence, the cloud application is ensured to operate normally at each edge server.

In an embodiment, the computer-readable instructions stored in the computer storage medium may be loaded by the processor 801 to perform following operations.

An allocated offline task, which is distributed by a management server through scheduling, is received, where the allocated offline task comprises an offline task received by the management server, or the allocated offline task comprises a subtask which corresponds to an edge server among N subtasks, the N subtasks are obtained by dividing the offline task based on idle computation resources of each edge server in one or more edge servers, of which a quantity is N, for executing the offline task, and a cloud application runs on the one or more edge servers. The allocated offline task is executed using the idle computation resources of the edge server while ensuring normal operation of the cloud application.

In an embodiment, the allocated offline task corresponds to a threshold of execution duration. When executing the allocated offline task using the idle computation resources of the edge server, the processor 801 performs following operations.

Duration required for completing execution of the allocated offline task is determined based on idle computation resources of the edge server. The allocated offline task is executed using the idle computation resources of the edge server in response to the required duration being less than the threshold.

In an embodiment, the idle computation resources of the edge server are computation resources remaining in the edge server when second computation resources required for operating the cloud application are consumed in the edge server. The processor 801 is further configured to perform following operations.

When the allocated offline task is being executed, dwelling duration of the allocated offline task in the edge server is obtained, in response to detecting that a quantity of current computation resources required for operating the cloud application in the edge server is greater than a quantity of the second computation resources.

Computation-resource release is performed according to a relationship between the dwelling duration and the threshold of execution duration, where the computation-resource release comprises suspending execution of the allocated offline task or terminating the execution of the allocated offline task, the computation-resource release comprises suspending the execution of the allocated offline task in response to a difference between the dwelling duration and the threshold of execution duration being greater than a threshold of time difference, and the computation-resource release comprises terminating the execution of the allocated offline task in response to the difference being less than the threshold of time difference.

In an embodiment, the computation-resource release comprises suspending the execution of the allocated offline task, and after the computation-resource release, the processor 901 is further configured to perform following operations.

The idle computation resources of the edge server are detected periodically. The execution of the allocated offline task is continued in response to the quantity of the idle computation resources of the edge server is greater than the quantity of the first computation resources. The execution of the allocated offline task is terminated, in response to the quantity of the idle computation resources of the edge server being less than the quantity of the first computation resources and the difference being less than the threshold of time difference.

In an embodiment, the processor 801 is further configured to transmit, when the edge server executes the allocated offline task, an overtime prompt to the management server in response to determining that duration required for executing the allocated offline task by the edge server is greater than the threshold of execution duration, where the overtime prompt indicates that the duration required for executing the allocated offline task by the edge server is greater than the threshold of execution duration to enable the management server to determine another edge server to execute the allocated offline task.

In embodiments of the present disclosure, the edge server receives the allocated offline task distributed by the management server through scheduling. The allocated offline task may be the offline task received by the management server, or the subtask corresponding to the edge server among the N subtasks. The N subtasks may be obtained by dividing the offline task based on the idle computation resources of the N edge servers, respectively, for executing the offline task. The allocated offline task is executed using the idle computation resources of the edge server while ensuring normal operation of the cloud application. Thereby, the offline task can be executed using the idle computation resource in each edge server while ensuring normal operation of the cloud application, regardless of peak or off-peak hours. Hence, a waste of computation resources is prevented in each edge server, a utilization rate of computation resources is improved, and a cost of operating the edge servers is reduced.

In an aspect, a computer program product is provided according to an embodiment of the present disclosure. The computer program product comprises computer-readable instructions stored in a computer storage medium.

In an embodiment, the processor 701 reads the computer-readable instructions from the computer storage medium, so that the server loads the computer-readable instructions to perform following operations. First computation resources for executing an offline task are determined. One or more edge servers, of which a quantity is N, for executing the offline task are determined, where a cloud application runs on the one or more edge servers, a quantity of idle computation resources of the one or more edge servers is greater than a quantity of the first computation resources, and the idle computation resources of the one or more edge servers is a sum of respective idle computation resources of all edge servers in the one or more edge servers. The offline task are distributed among the one or more edge servers through scheduling to enable all of the one or more edge servers to execute the offline task using the respective idle computation resources while ensuring normal operation of the cloud application.

In embodiments of the present disclosure, when receiving the offline task to be executed, the first computation resources for executing the offline task may be estimated first, and then the N edge server(s) for executing the offline task are obtained. The quantity of the idle computation resources of the N edge server(s) is greater than the quantity of the first computation resources, and the idle computation resources of the N edge servers refer to a sum of respective idle computation resources of all of the N edge servers. The offline task is distributed among the N edge server(s) through scheduling, so that the N edge server(s) use the respective idle computation resources to execute the offline task while ensuring normal operation of a cloud application. Thereby, the offline task can be executed using the idle computation resource in each edge server while ensuring normal operation of the cloud application, regardless of peak or off-peak hours. A waste of computation resources is prevented in each edge server, a utilization rate of computation resources is improved, and a cost of operating the edge servers is reduced. In addition, N may be equal to or greater than 1. When N is equal to 1, centralized execution of the offline task can be ensured, which facilitates management on execution of the offline task. When N is greater than 1, distributed execution of the offline task is implemented, which can not only ensure a progress of executing the offline task but also distribute a load on all edge servers. Hence, the cloud application is ensured to operate normally at each edge server.

In an embodiment, the processor 801 reads the computer-readable instruction from the computer storage medium, and the processor 901 executes the computer-readable instructions to enable the server to perform following operations.

An allocated offline task, which is distributed by a management server through scheduling, is received, where the allocated offline task comprises an offline task received by the management server, or the allocated offline task comprises a subtask which corresponds to an edge server among N subtasks, the N subtasks are obtained by dividing the offline task based on idle computation resources of each edge server in one or more edge servers, of which a quantity is N, for executing the offline task, and a cloud application runs on the one or more edge servers. The allocated offline task is executed using the idle computation resources of the edge server while ensuring normal operation of the cloud application.

In embodiments of the present disclosure, the edge server receives the allocated offline task distributed by the management server through scheduling. The allocated offline task may be the offline task received by the management server, or the subtask corresponding to the edge server among the N subtasks. The N subtasks may be obtained by dividing the offline task based on the idle computation resources of the N edge servers, respectively, for executing the offline task. The allocated offline task is executed using the idle computation resources of the edge server while ensuring normal operation of the cloud application. Thereby, the offline task can be executed using the idle computation resource in each edge server while ensuring normal operation of the cloud application, regardless of peak or off-peak hours. Hence, a waste of computation resources is prevented in each edge server, a utilization rate of computation resources is improved, and a cost of operating the edge servers is reduced.

## Claims

1. A method for processing a service, executable by a management server, comprising:
determining first computation resources for executing an offline task;
determining one or more edge servers, of which a quantity is N, for executing the offline task, wherein a cloud application runs on the one or more edge servers, a quantity of idle computation resources of the one or more edge servers is greater than a quantity of the first computation resources, and the idle computation resources of the one or more edge servers is a sum of respective idle computation resources of all edge servers in the one or more edge servers; and
distributing the offline task among the one or more edge servers through scheduling to enable all of the one or more edge servers to execute the offline task using the respective idle computation resources while ensuring normal operation of the cloud application.

2. The method according to claim 1, wherein distributing the offline task among the N edge servers through the scheduling comprises:
dividing the offline task into N subtasks based on idle computation resources of each of the N edge servers, wherein the N subtasks and the N edge servers are in a one-to-one correspondence, and a quantity of the idle computation resources of each of the N edge servers is greater than a quantity of computation resources for executing the corresponding subtask; and
allocating each of the N subtasks to the corresponding edge server to enable the corresponding edge server to execute said subtask.

3. The method according to claim 1, wherein:
the cloud application is deployed to one or more edge servers, of which a quantity is M, for execution, the one or more edge servers are allocated to one or more edge computing nodes, of which a quantity is P, each of the one or more edge computing node has at least one of the one or more edge servers, and M and P each is an integer greater than or equal to 1; and
determining the one or more edge servers for executing the offline task comprises:
selecting at least one edge computing node, of which a quantity is L, from the one or more edge computing nodes, wherein a quantity of idle computation resources of the at least one edge computing node is greater than the quantity of the first computation resources, the idle computation resources of the at least one edge computing node is a sum of respective idle computation resources of all of the at least one edge computing node, and the idle computation resources of each of the one or more edge computing nodes is determined according to the respective idle computation resources of the at least one edge server deployed in said edge computing node;
determining at least one candidate edge server from the at least one edge computing node based on an attribute of each edge server in the at least one edge computing nodes; and
determining the one or more edge servers from the at least one candidate edge server according to idle computation resources of each of the at least one candidate edge server and the first computation resources.

4. The method according to claim 3, wherein:
the attribute of each edge server comprises an operating state of said edge server, where the operating state indicates said edge server being idle or busy; and
determining the at least one candidate edge server from the at least one edge computing node based on an attribute of each edge server in the at least one edge computing nodes comprises:
determining, from the at least one edge computing node, an edge server of which the operating state indicates being idle as one of the at least one candidate edge server.

5. The method according to claim 3, wherein the attribute of each edge server comprises a server-type group to which said edge server belongs, where the server-type group indicates whether said server is in a whitelist; and
determining the at least one candidate edge server from the at least one edge computing node based on an attribute of each edge server in the at least one edge computing nodes comprises:
determining, from the at least one edge computing node, an edge server of which the server-type group indicates the edge server not in the whitelist as one of the at least one candidate edge server.

6. The method according to claim 2, further comprising:
monitoring, when each of the N edge servers executes the corresponding subtask, execution of the corresponding subtask at said edge server; and
reselecting another edge server for executing the corresponding subtask in response to monitoring an abnormity in the execution of the corresponding subtask at such edge server.

7. The method according to claim 2, wherein each of the N subtasks corresponds to a threshold of execution duration, and the method further comprises:
receiving, when each of the N edge servers executes the corresponding subtask, an overtime prompt reported by an edge server among the N edge servers, wherein:
the overtime prompt indicates that duration required for executing the corresponding subtask by the edge server is greater than the threshold corresponding to the corresponding subtask, and another edge server is required to be determined for executing the corresponding subtask.

8. The method according to claim 1, wherein:
the first computation resources comprise one or more of: GPU computation resources, CPU computation resources, an internal memory, a network bandwidth, and a network throughput;
the GPU computation resources comprise one or both of FLOPS of a GPU and OPS of the GPU; and
the CPU computation resources comprise one or both of FLOPS of a CPU and OPS of the CPU.

9. The method according to claim 1, wherein determining the first computation resources for executing the offline task comprises:
determining a degree of computation complexity corresponding to a type of the offline task according to correspondence between types of tasks and degrees of computation complexity;
searching history offline tasks for at least one matching task, wherein a computation complexity corresponding to each of the at least one matching task matches the determined computation complexity; and
estimating the first computation resources based on computation resources consumed for executing each matching task.

10. A method for processing a service, executable by an edge server in N edge servers for executing an offline task, wherein a cloud application runs on the N edge servers, and the method comprises:
receiving an allocated offline task, which is distributed by a management server through scheduling, wherein:
the allocated offline task comprises an offline task received by the management server, or the allocated offline task comprises a subtask which corresponds to the edge server among N subtasks, and
the N subtasks are obtained by dividing the offline task based on idle computation resources of each edge server in the N edge servers; and
executing the allocated offline task using the idle computation resources of the edge server while ensuring normal operation of the cloud application.

11. The method according to claim 10, wherein the allocated offline task corresponds to a threshold of execution duration, and executing the allocated offline task using the idle computation resources of the edge server comprises:
determining duration required for completing execution of the allocated offline task based on idle computation resources of the edge server; and
executing the allocated offline task using the idle computation resources of the edge server in response to the required duration being less than the threshold.

12. The method according to claim 11, wherein the idle computation resources of the edge server are computation resources remaining in the edge server when second computation resources required for operating the cloud application are consumed in the edge server, and the method further comprises:
obtain, when the allocated offline task is being executed, dwelling duration of the allocated offline task in the edge server, in response to detecting that a quantity of current computation resources required for operating the cloud application in the edge server is greater than a quantity of the second computation resources; and
performing computation-resource release according to a relationship between the dwelling duration and the threshold of execution duration, wherein:
the computation-resource release comprises suspending execution of the allocated offline task or terminating the execution of the allocated offline task;
the computation-resource release comprises suspending the execution of the allocated offline task in response to a difference between the dwelling duration and the threshold of execution duration being greater than a threshold of time difference; and
the computation-resource release comprises terminating the execution of the allocated offline task in response to the difference being less than the threshold of time difference.

13. The method according to claim 12, wherein:
the computation-resource release comprises suspending the execution of the allocated offline task, and
after performing the computation-resource release, the method further comprises:
detecting the idle computation resources of the edge server periodically;
continuing the execution of the allocated offline task, in response to the quantity of the idle computation resources of the edge server is greater than the quantity of the first computation resources; and
terminating the execution of the allocated offline task, in response to the quantity of the idle computation resources of the edge server being less than the quantity of the first computation resources and the difference being less than the threshold of time difference.

14. The method according to claim 11, further comprising:
transmitting, when the edge server executes the allocated offline task, an overtime prompt to the management server, in response to determining that duration required for executing the allocated offline task by the edge server is greater than the threshold of execution duration, wherein:
the overtime prompt indicates that the duration required for executing the allocated offline task by the edge server is greater than the threshold of execution duration to enable the management server to determine another edge server to execute the allocated offline task.

15. An apparatus for processing a service, comprising:
a determining unit, configured to determine first computation resources for executing an offline task, and further configured to determine one or more edge servers, of which a quantity is N, for executing the offline task, wherein a cloud application runs on the one or more edge servers, a quantity of idle computation resources of the one or more edge servers is greater than a quantity of the first computation resources, and the idle computation resources of the one or more edge servers is a sum of respective idle computation resources of all edge servers in the one or more edge servers; and
a scheduling unit, configured to distribute the offline task among the one or more edge servers through scheduling to enable all of the one or more edge servers to execute the offline task using the respective idle computation resources while ensuring normal operation of the cloud application.

16. The apparatus according to claim 15, wherein, the scheduling unit is further configured to:
divide the offline task into N subtasks based on idle computation resources of each of the N edge servers, wherein the N subtasks and the N edge servers are in a one-to-one correspondence, and a quantity of the idle computation resources of each of the N edge servers is greater than a quantity of computation resources for executing the corresponding subtask; and
allocate each of the N subtasks to the corresponding edge server to enable the corresponding edge server to execute said subtask.

17. An apparatus for processing a service, comprising:
a receiving unit, configured to receive an allocated offline task, which is distributed by a management server through scheduling, wherein:
the allocated offline task comprises an offline task received by the management server, or the allocated offline task comprises a subtask which corresponds to an edge server among N subtasks,
the N subtasks are obtained by dividing the offline task based on idle computation resources of each edge server in one or more edge servers, of which a quantity is N, for executing the offline task, and
a cloud application runs on the one or more edge servers; and
an executing unit, configured to execute the allocated offline task using the idle computation resources of the edge server while ensuring normal operation of the cloud application.

18. A server, comprising a memory and a processor, wherein:
the memory stores computer-readable instructions, and the processor when executing the computer-readable instructions performs the method according to any one of claims 1 to 9, or the method according to any one of claims 10 to 14.

19. A computer storage medium, storing computer-readable instructions, wherein the computer-readable instructions when executed by a processor are configured to implement the method according to any one of claims 1 to 9, or the method according to any one of claims 10 to 14.

20. A computer program product, comprising computer-readable instructions, wherein the computer-readable instructions when executed by a processor are configured to implement the method according to any one of claims 1 to 9, or the method according to any one of claims 10 to 14.
